(19) Europäisches Patentamt / European Patent Office / Office européen des brevets

(11) **EP 2 556 587 B1**

(12) **EUROPÄISCHE PATENTSCHRIFT**

(45) Veröffentlichungstag und Bekanntmachung des Hinweises auf die Patenterteilung:
**03.09.2014  Patentblatt 2014/36**

(21) Anmeldenummer: **11708715.5**

(22) Anmeldetag: **04.03.2011**

(51) Int Cl.:
**H02P 21/00** $^{(2006.01)}$

(86) Internationale Anmeldenummer:
**PCT/EP2011/001080**

(87) Internationale Veröffentlichungsnummer:
**WO 2011/124306 (13.10.2011 Gazette 2011/41)**

(54) **VERFAHREN ZUM ANSTEUERN EINES OPTIMALEN BETRIEBSPUNKTES BEI EINER SYNCHRONMASCHINE, VERFAHREN ZUM REGELN EINER SYNCHRONMASCHINE UND SYNCHRONMASCHINE**

METHOD FOR SETTING AN OPTIMAL OPERATING POINT FOR A SYNCHRONOUS MACHINE, METHOD FOR CONTROLLING A SYNCHRONOUS MACHINE, AND SYNCHRONOUS MACHINE

PROCÉDÉ POUR ACTIONNER UN POINT DE SERVICE OPTIMAL SUR UNE MACHINE SYNCHRONE, PROCÉDÉ POUR RÉGLER UNE MACHINE SYNCHRONE ET MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2010  DE 102010013462**

(43) Veröffentlichungstag der Anmeldung:
**13.02.2013  Patentblatt 2013/07**

(73) Patentinhaber: **Sew-Eurodrive GmbH & Co. KG**
**76646 Bruchsal (DE)**

(72) Erfinder:
- **EPSKAMP, Torsten**
  **75015 Bretten (DE)**
- **HARTMANN, Matthias**
  **85092 Kösching (DE)**
- **REINHARDT, Volkmar**
  **69124 Heidelberg (DE)**

(56) Entgegenhaltungen:
- **BAUSCH H ET AL: "Feed-forward control of current excited synchronous drives // Controle par avance de phase d'un entrainement synchrone alimente en courant", ICEM '94, CONFÉRENCE INTERNATIONALE SUR LES MACHINES ÉLECTRIQUES, INTERNATIONAL CONFERENCE ON ELECTRICAL MACHINES, 5 - 8 SEPTEMBRE/SEPTEMBER 1994, PALAIS DES CONGRÈS, PARIS, FRANCE, SOCIÉTÉ DES ÉLECTRICIENS ET DES ÉLECTRONICIENS, PARIS; THE INSTITUTI, Bd. 1, 5. September 1994 (1994-09-05), Seiten 220-225, XP002669654,**
- **BAUSCH H ET AL: "TORQUE CONTROL OF BATTERY-SUPPLIED SWITCHED RELUCTANCE DRIVES FOR ELECTRIC VEHICLES", INTERNATIONAL CONFERENCE ON ELECTRICAL MACHINES, XX, XX, Bd. 2, 10. September 1996 (1996-09-10), Seiten 229-234, XP002118560,**

EP 2 556 587 B1

Printed by Jouve, 75001 PARIS (FR)

**Beschreibung**

Die Erfindung betrifft ein Verfahren zum Ansteuern eines optimalen Betriebspunktes bei einer Synchronmaschine, ein Verfahren zum Regeln einer Synchronmaschine und eine Synchronmaschine. Die Kennliniensteuerung einer stromerregten Synchron-maschine wird in der Veröffentlichung "Feed-Forward Control of Current Excited Synchronous Drives", XP002669654, beschrieben.

Der Erfindung liegt daher die Aufgabe zugrunde, eine Synchronmaschine besser zu betreiben.

Erfindungsgemäß wird die Aufgabe bei dem Verfahren zum Ansteuern eines optimalen Betriebspunktes bei einer Synchronmaschine nach den in Anspruch 1, bei dem Verfahren zum Regeln einer Synchronmaschine nach den in Anspruch 2 und bei der Synchronmaschine nach den in Anspruch 3 angegebenen Merkmalen gelöst.

Wichtige Merkmale der Erfindung bei dem Verfahren sind, dass es zum Ansteuern eines optimalen Betriebspunktes bei einer Synchronmaschine, insbesondere im quasistationären Betrieb, vorgesehen ist, wobei
in einem ersten erfindungsgemäßen Verfahrensschritt für die Synchronmaschine mittels einer FEM-Methode oder mittels einer Messmethode eine funktionale Abhängigkeit der Spannungskomponenten $U_d$, Uq, $U_E$ von den Stromkomponenten $I_d$, $I_q$, $I_E$ bestimmt wird,
und daraus gemäß

$$\psi_d(I_d, I_q, I_E) = \int_0^{I_d} \frac{U_d(\tilde{I}_d, I_q, I_E) - R_1 \tilde{I}_d}{\frac{d\tilde{I}_d}{dt}} d\tilde{I}_d + \int_0^{I_E} \frac{U_d(0, I_q, \tilde{I}_E)}{\frac{d\tilde{I}_E}{dt}} d\tilde{I}_E + \int_0^{I_q} \frac{U_d(0, \tilde{I}_q, 0)}{\frac{d\tilde{I}_q}{dt}} d\tilde{I}_q$$

$$\psi_q(I_d, I_q, I_E) = \int_0^{I_q} \frac{U_q(I_d, \tilde{I}_q, I_E) - R_1 \tilde{I}_q}{\frac{d\tilde{I}_q}{dt}} d\tilde{I}_q + \int_0^{I_d} \frac{U_q(\tilde{I}_d, 0, I_E)}{\frac{d\tilde{I}_d}{dt}} d\tilde{I}_d + \int_0^{I_E} \frac{U_q(0, 0, \tilde{I}_E)}{\frac{d\tilde{I}_E}{dt}} d\tilde{I}_E$$

$$\psi_E(I_d, I_q, I_E) = \int_0^{I_E} \frac{U_E(I_d, I_q, \tilde{I}_E) - R_2 \tilde{I}_E}{\frac{d\tilde{I}_E}{dt}} d\tilde{I}_E + \int_0^{I_d} \frac{U_E(\tilde{I}_d, I_q, 0)}{\frac{d\tilde{I}_d}{dt}} d\tilde{I}_d + \int_0^{I_q} \frac{U_E(0, \tilde{I}_q, 0)}{\frac{d\tilde{I}_q}{dt}} d\tilde{I}_q$$

die jeweilige Abhängigkeit der Flusskomponente $\psi_d$, $\psi_q$, $\psi_E$ von den Stromkomponenten $I_d$, $I_q$, $I_E$ bestimmt wird,
wobei die mit Schlange gekennzeichneten Variablen die Integrationsvariablen darstellen,
wobei $R_1$ und $R_2$ die ohmschen Widerstände der entsprechenden Wicklungen der Synchronmaschine sind,
in einem zweiten erfindungsgemäßen Verfahrensschritt die Synchronmaschine im geregelten Betrieb betrieben wird und dabei ein Betriebspunkt gemäß

$$I_d = \frac{U_d + \Omega_L \, \psi_q(I_d, I_q, I_E)}{R_1}$$

$$I_q = \frac{U_q - \Omega_L \; \psi_d(I_d, I_q, I_E)}{R_1}$$

$$I_E = \frac{U_E}{R_2}$$

bestimmt und daraufhin geregelt wird.

Von Vorteil ist dabei, dass ein optimaler Betriebspunkt ansteuerbar ist, zu dessen Bestimmung die Sättigungsabhängigkeiten in der Maschine vollständig beschrieben sind.

Wichtige Merkmale bei dem Verfahren zum Regeln einer Synchronmaschine, insbesondere bei konstanter Drehzahl, sind, dass

in einem ersten erfindungsgemäßen Verfahrensschritt für die Synchronmaschine mittels einer FEM-Methode oder mittels einer Messmethode eine funktionale Abhängigkeit der Spannungskomponenten $U_d$, Uq, $U_E$ von den Stromkomponenten $I_d$, $I_q$, $I_E$ bestimmt wird,
und daraus gemäß

$$\psi_d(I_d, I_q, I_E) = \int_0^{I_d} \frac{U_d(\tilde{I}_d, I_q, I_E) - R_1\tilde{I}_d}{\frac{d\tilde{I}_d}{dt}} d\tilde{I}_d + \int_0^{I_E} \frac{U_d(0, I_q, \tilde{I}_E)}{\frac{d\tilde{I}_E}{dt}} d\tilde{I}_E + \int_0^{I_q} \frac{U_d(0, \tilde{I}_q, 0)}{\frac{d\tilde{I}_q}{dt}} d\tilde{I}_q$$

$$\psi_q(I_d, I_q, I_E) = \int_0^{I_q} \frac{U_q(I_d, \tilde{I}_q, I_E) - R_1\tilde{I}_q}{\frac{d\tilde{I}_q}{dt}} d\tilde{I}_q + \int_0^{I_d} \frac{U_q(\tilde{I}_d, 0, I_E)}{\frac{d\tilde{I}_d}{dt}} d\tilde{I}_d + \int_0^{I_E} \frac{U_q(0, 0, \tilde{I}_E)}{\frac{d\tilde{I}_E}{dt}} d\tilde{I}_E$$

$$\psi_E(I_d, I_q, I_E) = \int_0^{I_E} \frac{U_E(I_d, I_q, \tilde{I}_E) - R_2\tilde{I}_E}{\frac{d\tilde{I}_E}{dt}} d\tilde{I}_E + \int_0^{I_d} \frac{U_E(\tilde{I}_d, I_q, 0)}{\frac{d\tilde{I}_d}{dt}} d\tilde{I}_d + \int_0^{I_q} \frac{U_E(0, \tilde{I}_q, 0)}{\frac{d\tilde{I}_q}{dt}} d\tilde{I}_q$$

die jeweilige Abhängigkeit der Flusskomponente $\psi_d$, $\psi_q$, $\psi_E$ von den Stromkomponenten $I_d$, $I_q$, $I_E$ bestimmt wird,
wobei $R_1$ und $R_2$ die ohmschen Widerstände der entsprechenden Wicklungen der Synchronmaschine sind,
in einem zweiten erfindungsgemäßen Verfahrensschritt die Synchronmaschine im geregelten Betrieb betrieben wird,
wobei ein Regelverfahren verwendet wird, das gemäß

$$\begin{pmatrix} \dfrac{dI_d}{dt} \\[2mm] \dfrac{dI_q}{dt} \\[2mm] \dfrac{dI_E}{dt} \end{pmatrix} = \begin{pmatrix} \dfrac{d\psi_d}{dI_d} & \dfrac{d\psi_d}{dI_q} & \dfrac{d\psi_d}{dI_E} \\[2mm] \dfrac{d\psi_q}{dI_d} & \dfrac{d\psi_q}{dI_q} & \dfrac{d\psi_q}{dI_E} \\[2mm] \dfrac{d\psi_E}{dI_d} & \dfrac{d\psi_E}{dI_q} & \dfrac{d\psi_E}{dI_E} \end{pmatrix}^{-1} \begin{pmatrix} U_d \\ U_q \\ U_E \end{pmatrix} - \begin{pmatrix} R_1 I_d \\ R_1 I_q \\ R_2 I_E \end{pmatrix} - \Omega_L \begin{pmatrix} 0 & -1 & 0 \\ 1 & 0 & 0 \\ 0 & 0 & 0 \end{pmatrix} \begin{pmatrix} \psi_d \\ \psi_q \\ \psi_E \end{pmatrix}$$

arbeitet. Von Vorteil ist dabei, dass optimierte Regelverfahren verwendbar sind, da die Maschine mit ihren gesamten Sättigungsabhängigkeiten beschrieben ist.

Wichtige Merkmale bei der Synchronmaschine sind, dass in einer Signalelektronik ein Regler zur Durchführung des geregelten Betriebes angeordnet ist,

wobei Stromerfassungsmittel mit dem Regler elektrisch verbunden sind und das Ausgangssignal des Reglers zum Stellen der Spannung für die Synchronmaschine vorgesehen ist,

indem mittels der Signalelektronik entsprechend dem Ausgangssignal pulsweitenmodulierte Ansteuersignale steuerbaren Leistungshalbleiter eines Wechselrichters zugeführt werden,

wobei der Wechselrichter die Synchronmaschine speist.

Von Vorteil ist dabei, dass die erfindungsgemäßen Verfahren in einfacher Weise durchführbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

Der erfindungsgemäße Antrieb umfasst einen Synchronmotor, welcher eine Erregerfeldwicklung aufweist, beispielsweise auf seinem Rotor. Hierbei fließt ein Erregerstrom I_E durch die Erregerwicklung. Die Statorwicklungen werden von einem Wechselrichter gespeist, dessen steuerbare Leistungshalbleiterschalter von einer Steuerelektronik Ansteuersignale zugeführt werden.

Der Steuerelektronik wird der erfasste Motorström zugeführt, wobei aus diesen Werten mittels einer Regeleinheit ein Stellwert für die Ausgangsspannung des Wechselrichters bestimmt wird, aus welcher der Motor gespeist wird.

Innerhalb der Regeleinheit wird ein Motormodell, das auch als Maschinenmodell bezeichenbar ist, verwendet. Hierbei werden die Größen in einem üblichen (d,q)-Koordinatensystem dargestellt, dessen Achsen also in Richtung des momentbildenden Stromanteils und flussorientierten Stromanteils orientiert sind. Außerdem werden die Größen der Erregerwicklung mit dem Index E bezeichnet.

In der Figur 1 ist das erfindungsgemäße Verfahren schematisch skizziert.

In einem ersten erfindungsgemäßen Verfahrensschritt wird mittels einer FEM-Methode, also Finite-Elemente-Methode, der Motor modelliert. Dabei werden insbesondere die bestromten Wicklungsdrähte und die vorhandenen Materialien, wie Stahlblech oder dergleichen, mit ihren elektrischen und magnetischen Eigenschaften in einem Rechner rechentechnisch abgebildet und dann die jeweilige Abhängigkeit der Spannungskomponenten $U_d$, Uq, $U_E$ von den Stromkomponenten $I_d$, $I_q$, $I_E$ bestimmt. Auch die ohmschen Widerstände $R_1$ der d-Wicklung und $R_2$ der q-Wicklung der entsprechenden Wicklungen des Motors sind mittels der FEM-Methode bestimmbar.

Alternativ zur FEM-Methode sind die genannten Werte und Abhängigkeiten auch messtechnisch bestimmbar.

Mittels des Gleichungssystems

$$\psi_d(I_d, I_q, I_E) = \int_0^{I_d} \frac{U_d(\tilde{I}_d, I_q, I_E) - R_1 \tilde{I}_d}{\dfrac{d\tilde{I}_d}{dt}} d\tilde{I}_d + \int_0^{I_E} \frac{U_d(0, I_q, \tilde{I}_E)}{\dfrac{d\tilde{I}_E}{dt}} d\tilde{I}_E + \int_0^{I_q} \frac{U_d(0, \tilde{I}_q, 0)}{\dfrac{d\tilde{I}_q}{dt}} d\tilde{I}_q$$

$$\psi_q(I_d,I_q,I_E)=\int_0^{I_q}\frac{U_q(I_d,\tilde{I}_q,I_E)-R_1\tilde{I}_q}{\frac{d\tilde{I}_q}{dt}}d\tilde{I}_q+\int_0^{I_d}\frac{U_q(\tilde{I}_d,0,I_E)}{\frac{d\tilde{I}_d}{dt}}d\tilde{I}_d+\int_0^{I_E}\frac{U_q(0,0,\tilde{I}_E)}{\frac{d\tilde{I}_E}{dt}}d\tilde{I}_E$$

$$\psi_E(I_d,I_q,I_E)=\int_0^{I_E}\frac{U_E(I_d,I_q,\tilde{I}_E)-R_2\tilde{I}_E}{\frac{d\tilde{I}_E}{dt}}d\tilde{I}_E+\int_0^{I_d}\frac{U_E(\tilde{I}_d,I_q,0)}{\frac{d\tilde{I}_d}{dt}}d\tilde{I}_d+\int_0^{I_q}\frac{U_E(0,\tilde{I}_q,0)}{\frac{d\tilde{I}_q}{dt}}d\tilde{I}_q$$

wird die jeweilige Abhängigkeit der Flusskomponente $\psi_d$, $\psi_q$, $\psi_E$ von den Stromkomponenten $I_d$, $I_q$, $I_E$ bestimmt.

Für konstante Drehzahl und betragskonstante Ströme und Spannungen, also im quasistationären Zustand des Motors, wird ein Betriebspunkt aus dem folgenden Gleichungssystem

$$I_d=\frac{U_d+\Omega_L\,\psi_q(I_d,I_q,I_E)}{R_1}$$

$$I_q=\frac{U_q-\Omega_L\,\psi_d(I_d,I_q,I_E)}{R_1}$$

$$I_E=\frac{U_E}{R_2}$$

bestimmt. Hierbei sind also auch die Sättigungseigenschaften berücksichtigt. Somit ist also ein Optimaler Betriebspunkt bestimmbar, der zu den drei Spannungskomponenten die optimalen Stromkomponenten umfasst.

Im nicht-stationären, also dynamischen, Betrieb bei konstanter Drehzahl sind die Stromverläufe aus den Spannungsverläufen bestimmbar gemäß:

$$\begin{pmatrix}\dfrac{dI_d}{dt}\\[2mm]\dfrac{dI_q}{dt}\\[2mm]\dfrac{dI_E}{dt}\end{pmatrix}=\begin{pmatrix}\dfrac{d\psi_d}{dI_d}&\dfrac{d\psi_d}{dI_q}&\dfrac{d\psi_d}{dI_E}\\[2mm]\dfrac{d\psi_q}{dI_d}&\dfrac{d\psi_q}{dI_q}&\dfrac{d\psi_q}{dI_E}\\[2mm]\dfrac{d\psi_E}{dI_d}&\dfrac{d\psi_E}{dI_q}&\dfrac{d\psi_E}{dI_E}\end{pmatrix}^{-1}\left[\begin{pmatrix}U_d\\U_q\\U_E\end{pmatrix}-\begin{pmatrix}R_1I_d\\R_1I_q\\R_2I_E\end{pmatrix}-\Omega_L\begin{pmatrix}0&-1&0\\1&0&0\\0&0&0\end{pmatrix}\begin{pmatrix}\psi_d\\\psi_q\\\psi_E\end{pmatrix}\right]$$

Mittels dieses Gleichungssystems lässt sich ein Regelverfahren für den Synchronmotor betreiben.

In allen Fällen gilt für permanenterregte Motoren, dass $I_E$ als konstant einsetzbar ist.

**Patentansprüche**

1. Verfahren zum Ansteuern eines optimalen Betriebspunktes bei einer Synchronmaschine, insbesondere im quasistationären Betrieb,
**dadurch gekennzeichnet, dass**
in einem ersten erfindungsgemäßen Verfahrensschritt für die Synchronmaschine mittels einer FEM-Methode eine funktionale Abhängigkeit der Spannungskomponenten $U_d$, Uq, $U_E$ von den Stromkomponenten $I_d$, $I_q$, $I_E$ bestimmt wird,
und daraus gemäß

$$\psi_d(I_d,I_q,I_E) = \int_0^{I_d} \frac{U_d(\tilde{I}_d,I_q,I_E) - R_1\tilde{I}_d}{\frac{d\tilde{I}_d}{dt}} d\tilde{I}_d + \int_0^{I_E} \frac{U_d(0,I_q,\tilde{I}_E)}{\frac{d\tilde{I}_E}{dt}} d\tilde{I}_E + \int_0^{I_q} \frac{U_d(0,\tilde{I}_q,0)}{\frac{d\tilde{I}_q}{dt}} d\tilde{I}_q$$

$$\psi_q(I_d,I_q,I_E) = \int_0^{I_q} \frac{U_q(I_d,\tilde{I}_q,I_E) - R_1\tilde{I}_q}{\frac{d\tilde{I}_q}{dt}} d\tilde{I}_q + \int_0^{I_d} \frac{U_q(\tilde{I}_d,0,I_E)}{\frac{d\tilde{I}_d}{dt}} d\tilde{I}_d + \int_0^{I_E} \frac{U_q(0,0,\tilde{I}_E)}{\frac{d\tilde{I}_E}{dt}} d\tilde{I}_E$$

$$\psi_E(I_d,I_q,I_E) = \int_0^{I_E} \frac{U_E(I_d,I_q,\tilde{I}_E) - R_2\tilde{I}_E}{\frac{d\tilde{I}_E}{dt}} d\tilde{I}_E + \int_0^{I_d} \frac{U_E(\tilde{I}_d,I_q,0)}{\frac{d\tilde{I}_d}{dt}} d\tilde{I}_d + \int_0^{I_q} \frac{U_E(0,\tilde{I}_q,0)}{\frac{d\tilde{I}_q}{dt}} d\tilde{I}_q$$

die jeweilige Abhängigkeit der Flusskomponente $\psi_d$, $\psi_q$ q, $\psi_E$ von den Stromkomponenten $I_d$, $I_q$, $I_E$ bestimmt wird,
wobei $R_1$ und $R_2$ die ohmschen Widerstände der entsprechenden Wicklungen der Synchronmaschine sind,
in einem zweiten erfindungsgemäßen Verfahrensschritt die Synchronmaschine im geregelten Betrieb betrieben wird
und dabei ein Betriebspunkt gemäß

$$I_d = \frac{U_d + \Omega_L\, \psi_q(I_d,I_q,I_E)}{R_1}$$

$$I_q = \frac{U_q - \Omega_L\, \psi_d(I_d,I_q,I_E)}{R_1}$$

$$I_E = \frac{U_E}{R_2}$$

bestimmt und daraufhin geregelt wird.

2. Verfahren zum Regeln einer Synchronmaschine, insbesondere bei konstanter Drehzahl,
**dadurch gekennzeichnet, dass**
in einem ersten erfindungsgemäßen Verfahrensschritt für die Synchronmaschine mittels einer FEM-Methode eine funktionale Abhängigkeit der Spannungskomponenten $U_d$, Uq, $U_E$ von den Stromkomponenten $I_d$, $I_q$, $I_E$ bestimmt wird,
und daraus gemäß

$$\psi_d(I_d, I_q, I_E) = \int_0^{I_d} \frac{U_d(\tilde{I}_d, I_q, I_E) - R_1 \tilde{I}_d}{\frac{d\tilde{I}_d}{dt}} d\tilde{I}_d + \int_0^{I_E} \frac{U_d(0, I_q, \tilde{I}_E)}{\frac{d\tilde{I}_E}{dt}} d\tilde{I}_E + \int_0^{I_q} \frac{U_d(0, \tilde{I}_q, 0)}{\frac{d\tilde{I}_q}{dt}} d\tilde{I}_q$$

$$\psi_q(I_d, I_q, I_E) = \int_0^{I_q} \frac{U_q(I_d, \tilde{I}_q, I_E) - R_1 \tilde{I}_q}{\frac{d\tilde{I}_q}{dt}} d\tilde{I}_q + \int_0^{I_d} \frac{U_q(\tilde{I}_d, 0, I_E)}{\frac{d\tilde{I}_d}{dt}} d\tilde{I}_d + \int_0^{I_E} \frac{U_q(0, 0, \tilde{I}_E)}{\frac{d\tilde{I}_E}{dt}} d\tilde{I}_E$$

$$\psi_E(I_d, I_q, I_E) = \int_0^{I_E} \frac{U_E(I_d, I_q, \tilde{I}_E) - R_2 \tilde{I}_E}{\frac{d\tilde{I}_E}{dt}} d\tilde{I}_E + \int_0^{I_d} \frac{U_E(\tilde{I}_d, I_q, 0)}{\frac{d\tilde{I}_d}{dt}} d\tilde{I}_d + \int_0^{I_q} \frac{U_E(0, \tilde{I}_q, 0)}{\frac{d\tilde{I}_q}{dt}} d\tilde{I}_q$$

die jeweilige Abhängigkeit der Flusskomponente $\psi_d$, $\psi_q$, $\psi_E$ von den Stromkomponenten $I_d$, $I_q$, $I_E$ bestimmt wird, wobei $R_1$ und $R_2$ die ohmschen Widerstände der entsprechenden Wicklungen der Synchronmaschine sind, in einem zweiten erfindungsgemäßen Verfahrensschritt die Synchronmaschine im geregelten Betrieb betrieben wird, wobei ein Regelverfahren verwendet wird, das gemäß

$$\begin{pmatrix} \frac{dI_d}{dt} \\ \frac{dI_q}{dt} \\ \frac{dI_E}{dt} \end{pmatrix} = \begin{pmatrix} \frac{d\psi_d}{dI_d} & \frac{d\psi_d}{dI_q} & \frac{d\psi_d}{dI_E} \\ \frac{d\psi_q}{dI_d} & \frac{d\psi_q}{dI_q} & \frac{d\psi_q}{dI_E} \\ \frac{d\psi_E}{dI_d} & \frac{d\psi_E}{dI_q} & \frac{d\psi_E}{dI_E} \end{pmatrix}^{-1} \begin{bmatrix} \begin{pmatrix} U_d \\ U_q \\ U_E \end{pmatrix} - \begin{pmatrix} R_1 I_d \\ R_1 I_q \\ R_2 I_E \end{pmatrix} - \Omega_L \begin{pmatrix} 0 & -1 & 0 \\ 1 & 0 & 0 \\ 0 & 0 & 0 \end{pmatrix} \begin{pmatrix} \psi_d \\ \psi_q \\ \psi_E \end{pmatrix} \end{bmatrix}$$

arbeitet.

3. Synchronmaschine zur Durchführung eines Verfahrens nach mindestens einem der vorangegangenen Ansprüche, **dadurch gekennzeichnet, dass**
in einer Signalelektronik ein Regler zur Durchführung des geregelten Betriebes angeordnet ist,
wobei Stromerfassungsmittel mit dem Regler elektrisch verbunden sind und das Ausgangssignal des Reglers zum Stellen der Spannung für die Synchronmaschine vorgesehen ist,
indem mittels der Signalelektronik entsprechend dem Ausgangssignal pulsweitenmodulierte Ansteuersignale steuerbaren Leistungshalbleiter eines Wechselrichters zugeführt werden,
wobei der Wechselrichter die Synchronmaschine speist.

## Claims

1. Method for setting an optimal operating point in a synchronous machine, in particular in quasi-steady-state operation, **characterised in that**
in a first method step according to the invention a functional dependence of the voltage components $U_d$, Uq, $U_E$ on the current components $I_d$, $I_q$, $I_E$ is determined for the synchronous machine by means of an FEM method,
and the respective dependence of the flux component $\psi_d$, $\psi_q$, $\psi_E$ on the current components $I_d$, $I_q$, $I_E$ is determined from this according to

$$\Psi_d(I_d, I_q, I_E) = \int_0^{I_d} \frac{U_d(\tilde{I}_d, I_q, I_E) - R_1\tilde{I}_d}{\frac{d\tilde{I}_d}{dt}} d\tilde{I}_d + \int_0^{I_E} \frac{U_d(0, I_q, \tilde{I}_E)}{\frac{d\tilde{I}_E}{dt}} d\tilde{I}_E + \int_0^{I_q} \frac{U_d(0, \tilde{I}_q, 0)}{\frac{d\tilde{I}_q}{dt}} d\tilde{I}_q$$

$$\Psi_q(I_d, I_q, I_E) = \int_0^{I_q} \frac{U_q(I_d, \tilde{I}_q, I_E) - R_1\tilde{I}_q}{\frac{d\tilde{I}_q}{dt}} d\tilde{I}_q + \int_0^{I_d} \frac{U_q(\tilde{I}_d, 0, I_E)}{\frac{d\tilde{I}_d}{dt}} d\tilde{I}_d + \int_0^{I_E} \frac{U_q(0, 0, \tilde{I}_E)}{\frac{d\tilde{I}_E}{dt}} d\tilde{I}_E$$

$$\Psi_E(I_d, I_q, I_E) = \int_0^{I_E} \frac{U_E(I_d, I_q, \tilde{I}_E) - R_2\tilde{I}_E}{\frac{d\tilde{I}_E}{dt}} d\tilde{I}_E + \int_0^{I_d} \frac{U_E(\tilde{I}_d, I_q, 0)}{\frac{d\tilde{I}_d}{dt}} d\tilde{I}_d + \int_0^{I_q} \frac{U_E(0, \tilde{I}_q, 0)}{\frac{d\tilde{I}_q}{dt}} d\tilde{I}_q$$

where $R_1$ and $R_2$ are the ohmic resistances of the corresponding windings of the synchronous machine,
in a second method step according to the invention the synchronous machine is operated in regulated operation and in so doing an optimal operating point according to

$$I_d = \frac{U_d + \Omega_L \Psi_q(I_d, I_q, I_E)}{R_1}$$

$$I_q = \frac{U_q - \Omega_L \Psi_d(I_d, I_q, I_E)}{R_1}$$

$$I_E = \frac{U_E}{R_2}$$

is determined and thereupon regulated.

2. Method for regulating a synchronous machine, in particular at a constant rotational speed,
   **characterised in that**
   in a first method step according to the invention a functional dependence of the voltage components $U_d$, Uq, $U_E$ on the current components $I_d$, $I_q$, $I_E$ is determined for the synchronous machine by means of an FEM method,
   and the respective dependence of the flux component $\psi_d$, $\psi_q$, $\psi_E$ on the current components $I_d$, $I_q$, $I_E$ is determined from this according to

$$\Psi_d(I_d, I_q, I_E) = \int_0^{I_d} \frac{U_d(\tilde{I}_d, I_q, I_E) - R_1\tilde{I}_d}{\frac{d\tilde{I}_d}{dt}} d\tilde{I}_d + \int_0^{I_E} \frac{U_d(0, I_q, \tilde{I}_E)}{\frac{d\tilde{I}_E}{dt}} d\tilde{I}_E + \int_0^{I_q} \frac{U_d(0, \tilde{I}_q, 0)}{\frac{d\tilde{I}_q}{dt}} d\tilde{I}_q$$

$$\Psi_q(I_d, I_q, I_E) = \int_0^{I_q} \frac{U_q(I_d, \tilde{I}_q, I_E) - R_1\tilde{I}_q}{\frac{d\tilde{I}_q}{dt}} d\tilde{I}_q + \int_0^{I_d} \frac{U_q(\tilde{I}_d, 0, I_E)}{\frac{d\tilde{I}_d}{dt}} d\tilde{I}_d + \int_0^{I_E} \frac{U_q(0, 0, \tilde{I}_E)}{\frac{d\tilde{I}_E}{dt}} d\tilde{I}_E$$

$$\Psi_E(I_d, I_q, I_E) = \int_0^{I_E} \frac{U_E(I_d, I_q, \tilde{I}_E) - R_2\tilde{I}_E}{\frac{d\tilde{I}_E}{dt}} d\tilde{I}_E + \int_0^{I_d} \frac{U_E(\tilde{I}_d, I_q, 0)}{\frac{d\tilde{I}_d}{dt}} d\tilde{I}_d + \int_0^{I_q} \frac{U_E(0, \tilde{I}_q, 0)}{\frac{d\tilde{I}_q}{dt}} d\tilde{I}_q$$

where $R_1$ and $R_2$ are the ohmic resistances of the corresponding windings of the synchronous machine,
in a second method step according to the invention the synchronous machine is operated in regulated operation,
wherein a regulating method is used which operates according to

$$\begin{pmatrix} \frac{dI_d}{dt} \\ \frac{dI_q}{dt} \\ \frac{dI_E}{dt} \end{pmatrix} = \begin{pmatrix} \frac{d\Psi_d}{dI_d} & \frac{d\Psi_d}{dI_q} & \frac{d\Psi_d}{dI_E} \\ \frac{d\Psi_q}{dI_d} & \frac{d\Psi_q}{dI_q} & \frac{d\Psi_q}{dI_E} \\ \frac{d\Psi_E}{dI_d} & \frac{d\Psi_E}{dI_q} & \frac{d\Psi_E}{dI_E} \end{pmatrix}^{-1} \left[ \begin{pmatrix} U_d \\ U_q \\ U_E \end{pmatrix} - \begin{pmatrix} R_1 I_d \\ R_1 I_q \\ R_2 I_E \end{pmatrix} - \Omega_L \begin{pmatrix} 0 & -1 & 0 \\ 1 & 0 & 0 \\ 0 & 0 & 0 \end{pmatrix} \begin{pmatrix} \Psi_d \\ \Psi_q \\ \Psi_E \end{pmatrix} \right].$$

3. Synchronous machine for carrying out a method according to at least one of the preceding claims,
   **characterised in that**
   a regulator for carrying out the regulated operation is arranged in signal electronics,
   wherein current detection means are electrically connected to the regulator and the output signal of the regulator is provided for controlling the voltage for the synchronous machine

by supplying pulse-width-modulated drive signals to controllable power semiconductors of an inverter by means of the signal electronics according to the output signal,
wherein the inverter feeds the synchronous machine.

**Revendications**

1. Procédé pour atteindre un point de fonctionnement optimal sur une machine synchrone, en particulier en mode quasi stationnaire,
**caractérisé en ce que**
dans une première étape de procédé selon l'invention pour la machine synchrone, une dépendance fonctionnelle entre les composantes de tension $U_d$, $U_q$, $U_E$ et les composantes de courant $I_d$, $I_q$, $I_E$ est déterminée au moyen d'une méthode des éléments finis,
et la dépendance respective entre les composantes de flux $\psi_d$, $\psi_q$, $\psi_E$ et les composantes de courant $I_d$, $I_q$, $I_E$ est déterminée selon

$$\psi_d(I_d,I_q,I_E) = \int_0^{I_d} \frac{U_d(\widetilde{I}_d,I_q,I_E)-R_1\widetilde{I}_d}{\frac{d\widetilde{I}_d}{dt}}d\widetilde{I}_d + \int_0^{I_E} \frac{U_d(0,I_q,\widetilde{I}_E)}{\frac{d\widetilde{I}_E}{dt}}d\widetilde{I}_E + \int_0^{I_q} \frac{U_d(0,\widetilde{I}_q,0)}{\frac{d\widetilde{I}_q}{dt}}d\widetilde{I}_q$$

$$\psi_q(I_d,I_q,I_E) = \int_0^{I_q} \frac{U_q(I_d,\widetilde{I}_q,I_E)-R_1\widetilde{I}_q}{\frac{d\widetilde{I}_q}{dt}}d\widetilde{I}_q + \int_0^{I_d} \frac{U_q(\widetilde{I}_d,0,I_E)}{\frac{d\widetilde{I}_d}{dt}}d\widetilde{I}_d + \int_0^{I_E} \frac{U_q(0,0,\widetilde{I}_E)}{\frac{d\widetilde{I}_E}{dt}}d\widetilde{I}_E$$

$$\psi_E(I_d,I_q,I_E) = \int_0^{I_E} \frac{U_E(I_d,I_q,\widetilde{I}_E)-R_2\widetilde{I}_E}{\frac{d\widetilde{I}_E}{dt}}d\widetilde{I}_E + \int_0^{I_d} \frac{U_E(\widetilde{I}_d,I_q,0)}{\frac{d\widetilde{I}_d}{dt}}d\widetilde{I}_d + \int_0^{I_q} \frac{U_E(0,\widetilde{I}_q,0)}{\frac{d\widetilde{I}_q}{dt}}d\widetilde{I}_q$$

où $R_1$ et $R_2$ sont les résistances ohmiques des enroulements correspondants de la machine synchrone,
dans une deuxième étape de procédé selon l'invention, la machine synchrone est exploitée en mode régulé et un point de fonctionnement déterminé selon

$$I_d = \frac{U_d+\Omega_L\psi_q(I_d,I_q,I_E)}{R_1}$$

$$I_q = \frac{U_q+\Omega_L\psi_d(I_d,I_q,I_E)}{R_1}$$

$$I_E = \frac{U_E}{R_2}$$

et la régulation effectuée sur cette base.

2.  Procédé de régulation d'une machine synchrone, en particulier à vitesse de rotation constante,
    **caractérisé en ce que**
    dans une première étape de procédé selon l'invention pour la machine synchrone, une dépendance fonctionnelle entre les composantes de tension $U_d$, Uq, $U_E$ et les composantes de courant $I_d$, Iq, $I_E$ est déterminée au moyen d'une méthode des éléments finis,
    et la dépendance respective entre les composantes de flux $\psi_d$, $\psi_q$, $\psi_E$ et les composantes de courant $I_d$, $I_q$, $I_E$ est déterminée selon

$$\psi_d(I_d, I_q, I_E) = \int_0^{I_d} \frac{U_d(\widetilde{I}_d, I_q, I_E) - R_1\widetilde{I}_d}{\frac{d\widetilde{I}_d}{dt}} d\widetilde{I}_d + \int_0^{I_E} \frac{U_d(0, I_q, \widetilde{I}_E)}{\frac{d\widetilde{I}_E}{dt}} d\widetilde{I}_E + \int_0^{I_q} \frac{U_d(0, \widetilde{I}_q, 0)}{\frac{d\widetilde{I}_q}{dt}} d\widetilde{I}_q$$

$$\psi_q(I_d, I_q, I_E) = \int_0^{I_q} \frac{U_q(I_d, \widetilde{I}_q, I_E) - R_1\widetilde{I}_q}{\frac{d\widetilde{I}_q}{dt}} d\widetilde{I}_q + \int_0^{I_d} \frac{U_q(\widetilde{I}_d, 0, I_E)}{\frac{d\widetilde{I}_d}{dt}} d\widetilde{I}_d + \int_0^{I_E} \frac{U_q(0, 0, \widetilde{I}_E)}{\frac{d\widetilde{I}_E}{dt}} d\widetilde{I}_E$$

$$\psi_E(I_d, I_q, I_E) = \int_0^{I_E} \frac{U_E(I_d, I_q, \widetilde{I}_E) - R_2\widetilde{I}_E}{\frac{d\widetilde{I}_E}{dt}} d\widetilde{I}_E + \int_0^{I_d} \frac{U_E(\widetilde{I}_d, I_q, 0)}{\frac{d\widetilde{I}_d}{dt}} d\widetilde{I}_d + \int_0^{I_q} \frac{U_E(0, \widetilde{I}_q, 0)}{\frac{d\widetilde{I}_q}{dt}} d\widetilde{I}_q$$

où $R_1$ et $R_2$ sont les résistances ohmiques des enroulements correspondants de la machine synchrone,
dans une deuxième étape de procédé selon l'invention, la machine synchrone est exploitée en mode régulé, en utilisant un procédé de régulation qui fonctionne selon

$$\begin{pmatrix} \frac{dI_d}{dt} \\ \frac{dI_q}{dt} \\ \frac{dI_E}{dt} \end{pmatrix} = \begin{pmatrix} \frac{d\psi_d}{dI_d} & \frac{d\psi_d}{dI_q} & \frac{d\psi_d}{dI_E} \\ \frac{d\psi_q}{dI_d} & \frac{d\psi_q}{dI_q} & \frac{d\psi_q}{dI_E} \\ \frac{d\psi_E}{dI_d} & \frac{d\psi_E}{dI_q} & \frac{d\psi_E}{dI_E} \end{pmatrix}^{-1} \begin{pmatrix} U_d \\ U_q \\ U_E \end{pmatrix} - \begin{pmatrix} R_1 I_d \\ R_1 I_q \\ R_2 I_E \end{pmatrix} - \Omega_L \begin{pmatrix} 0 & -1 & 0 \\ 1 & 0 & 0 \\ 0 & 0 & 0 \end{pmatrix} \begin{pmatrix} \psi_d \\ \psi_q \\ \psi_E \end{pmatrix}.$$

3.  Machine synchrone pour exécuter un procédé selon au moins l'une des revendications précédentes,
    caractérisée ce
    qu'un régulateur permettant de réaliser le mode régulé est disposé dans une électronique de signalisation,
    des moyens de détection de courant étant reliés électriquement au régulateur et le signal de sortie du régulateur étant prévu pour régler la tension pour la machine synchrone, des signaux de commande à impulsions modulées en largeur en fonction du signal de sortie étant amenés à des semi-conducteurs de puissance commandables d'un onduleur au moyen de l'électronique de signalisation,
    l'onduleur alimentant la machine synchrone.